# EUROPEAN PATENT SPECIFICATION

(11) **EP 2 440 355 B1**
(45) Date of publication and mention of the grant of the patent: **03.09.2014**
(21) Application number: 10740277.8
(22) Date of filing: 04.06.2010
(51) Int. Cl.: B23C 3/30, B23Q 5/04

(54) **DEVICE PROVIDED TO BE USED TOGETHER WITH EXISTING TOOLS TO MILL GROOVES INSIDE HOLES**
VORRICHTUNG GEIGNET UM MIT ANDEREN WERKZEUGEN VERWENDET ZU WERDEN, UM NUTEN INNNERHALB VON BOHRUNGEN ZU FRÄSEN
DISPOSITIF POUVANT ÊTRE UTILISÉ EN COMBINAISON AVEC DES OUTILS EXISTANTS POUR LE FRAISAGE DE RAINURES À L'INTÉRIEUR DE TROUS

(30) Priority: 10.06.2009 IT TO20090443
(43) Date of publication of application: 18.04.2012
(73) Proprietor: Veneri, Alessandra, 20038 Seregno (Milano) (IT); Broggini, Roberto, 20038 Seregno (Milano) (IT)
(72) Inventor: Veneri, Alessandra, 20038 Seregno (Milano) (IT); Broggini, Roberto, 20038 Seregno (Milano) (IT)
(74) Representative: Buzzi, Franco
(86) International application number: PCT/IB2010/052501
(87) International publication number: WO 2010/143111

(56) References cited:
- EP-A1- 0 095 449
- EP-A1- 0 305 616
- US-A- 2 475 227
- US-A- 4 795 293
- US-A- 4 923 342

## Description

### Field of the Invention

The present invention concerns a device according to the preamble of claim 1, and provided to be used together with commercially available tools used to mill grooves of various shapes and sizes inside holes of various shapes and sizes, named in the following milling tools, which allows the use thereof as machine tools.

### State of the Art

A device of this kind is known for example from US Patent US-4.923.342.

### Summary of the Invention

The object of the invention is to provide such a device particularly, but not exclusively, adapted to be applied in machining centres which, in order to perform their machining operations, among which the tool changes, require the locking of these tools in a predetermined position.

Such an object is achieved primarily according to what is stated in claim 1, and in the second place in the dependent claims.

### Brief Description of the Drawings

The milling tool and the related device according to the invention will now be described in detail with reference to the annexed drawings:
- Figure 1 shows, in a perspective view, the milling tool according to the state of the art;
- Figure 2 shows, in a front section, the tool and the head of the machine tool 6 fitted with the device for the application of the tool itself onto the machine tool;
- Figure 3 shows the perspective exploded view of the shaft stem of the device;
- Figure 4 shows the perspective exploded view of the containment body 10, complete with the locking mechanism and the related parts, and
- Figure 5 shows the perspective exploded view of the anti-rotation pin, which is adapted to be positioned onto the head of the machine.

### Detailed Description of the Invention

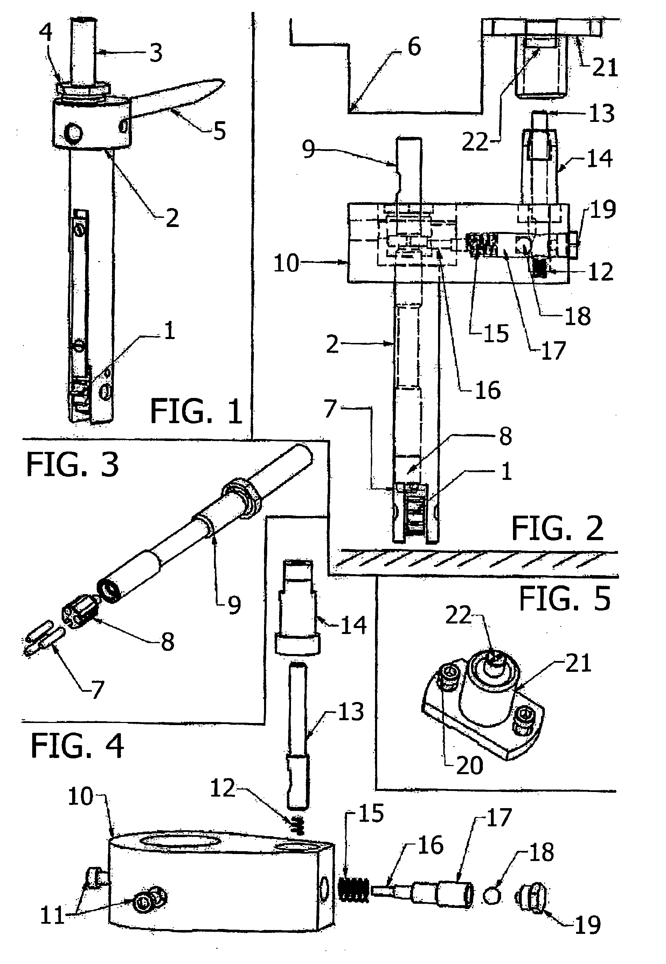

Referring to the drawings, the milling tool (Figure 1) which belongs to the State of the Art comprises:
- a milling cutter 1 (Figure 2);
- a body 2 (Figure 1);
- a shaft stem 3 (Figure 1) in a single piece, inserted into the body 2 (Figure 1), the function of which is to transmit the rotary motion, received from the head of traditional machine tools, such as drilling and milling machines and lathes, to the milling cutter 1 (Figure 1) which is arranged on the opposite end of the body 2 from where the shaft stem 3 (Figure 1) is inserted, and with which the shaft stem is directly engaged, through engagement pins inserted at the end thereof. The shaft stem forms at the same time the coupling of the tool itself to the machine tool;
- a ring nut 4 (Figure 1) which prevents the shaft stem from coming out of its housing during operation;
- a rod 5 (Figure 1) fastened to the body which, during tooling, by leaning against the column of a traditional machine tool, prevents the body from rotating together with the shaft stem.

In its present state, the previously described milling tool can be fitted only to traditional machine tools.

On the contrary, it is not possible to couple it to machine tools such as, but not exclusively, to machining centres which, in order perform their operations, including tool changes, need to have these tools locked in a predetermined position. Actually, in its current,configuration, the milling tool cannot be locked in this position, because no constraint is exerted on the shaft stem rotation. Moreover, the rod size prevents its arrangement into the tool crib of these machines. Finally, if it is inserted into the head of the machine tool, it is not possible to carry out the anti-rotation which is essential for its proper operation, nor is it possible to find a fixed reference to perform machining, because the axis of the shaft stem is eccentric with respect to that of the body.

The device comprises a new shaft stem 9 (Figure 3); a containment body 10 (Figure 4) which includes the locking mechanism, arranged transversely with respect to the shaft stem 9 and to the related body 2, and comprising the parts 12, 13, 14, 15, 16, 17, 18, 19 (Figure 4: 12 spring element of the slider, 13 slider, 14 anti-rotation pin, 15 spring element of the ball holding pin, 16 sensing pin, 17 ball holding pin, 18 ball, 19 guiding cap); a housing of the anti-rotation pin (Figure 5).

The new shaft stem (Figure 3), which replaces the shaft stem of the current state of the art 3 (Figure 1), comprises:
- a cylindrical stem 9 (Figure 3) having different diameters and having, preferably but not exclusively at the height of the maximum diameter, a flat surface needed to lock the stem in a predetermined position with respect to its axes;
- a pin holder head 8 (Figure 3) having holes into which the engagement pins 7 are inserted (Figure 3). Such a head is joined to the stem by means of a suitable, preferably but not exclusively threaded, joint, which is arranged at the opposite end with respect to the one where the engagement pins are inserted.

The containment body 10 (Figure 4) fitted with the locking mechanism, parts 12, 13, 14, 15, 16, 17, 18, 19 (Figure 4) comprises:
- a containment body 10 (Figure 4) wherein the body 2 (Figure 1) of the milling tool is partially arranged, and that has a geometry that allows the connection between the shaft stem (Figure 3) and the sensing pin 16 (Figure 4) which is part of the locking mechanism;
- fastening dowels 11 (Figure 4) or other means adapted to the purpose, that make the containment body 10 (Figure 4) integral with the body 2 (Figure 1) of the milling tool, so that no axial shifts or mutual rotations can take place;
- a ball holding pin 17 (Figure 4) within the containment body 10 (Figure 4) that slides along its own axis in the special housing wherein it is inserted. The ball holding pin 17 (Figure 4) has a cavity at one end, that provides the ball housing 18 (Figure 4);
- a sensing pin 16 (Figure 4) joined to the end of the ball holding pin 17 (Figure 4) on the opposite end from where the cavity for the ball housing 18 is located (Figure 4). The sensing pin, by interacting with the flat surface located on the maximum diameter of the stem 9 (Figure 3) of the shaft (Figure 3), allows the latter to be locked in a predetermined position. Said sensing pin 16 (Figure 2) is partly arranged in the specially foreseen cavity provided in the containment body 10 (Figure 2) and is partly housed in the related cavity provided on the body of the milling tool 2 (Figure 2);
- a slider 13 (Figure 4) partially contained within the containment body 10 (Figure 4) that slides along its own axis in the special housing wherein it is inserted.

This slider has on its surface a flat section with varying depth, facing the ball 18 (Figure 4) housed in the ball bearing pin 7 (Figure 4) and serving as a guide and as a bearing for the ball itself. Said slider has moreover a groove along its axis on the side opposite the flat section, that serves as a guide for the ball. The slider 13 (Figure 2) also acts as a stop to retain the ball 18 (Figure 2), the ball holding pin 17 (Figure 2) and the sensing pin 16 (Figure 2);
- a ball 18 (Figure 2) arranged between the ball holding pin 17 (Figure 2) and the slider 13 (Figure 2), directly contacting both elements;
- the spring element of the slider 12 (Figure 4) and the spring element of the ball holding pin 15 (Figure 4) being adapted to be spring biased, in order to release later on the stored force needed to provide motion to the slider 13 (Figure 4) and to the ball holding pin 17 (Figure 4);
- a guide cap 19 (Figure 4) that is partially inserted into the containment body 10 (Figure 4) and is integrally fastened onto it. The said cap has, at the end inserted into the containment body 10 (Figure 2), a relief which, by interacting with the groove provided on the slider 13 (Figure 2), prevents the latter from rotating inside its own housing.
- an anti-rotation pin 14 (Figure 4) having an inner cavity with variable geometry, wherein the end of the slider which is not inserted in the containment body is partially arranged. Said anti-rotation pin 14 (Figure 2) is integrally fastened to the containment body 10 (Figure 2), thus preventing the slider from coming completely out of its housing arranged within the containment body itself.

The housing of the anti-rotation pin (Figure 5) comprises:
- a flanged body 21 (Figure 5) that is applied laterally to the head of the machine tool, such as, for example, but not exclusively, a machining centre, with suitable fastening elements 20 (Figure 5), and having a hollow geometry adapted to house the anti-rotation pin 14 (Figure 4). The insertion of this pin into said flanged body sets the slider in motion.
- an adjustment dowel 22 (Figure 5) housed inside the flanged body 21 (Figure 5) which, once regulated, keeps the stroke of the slider 13 constant.

The device operates in the following way:
Once the new shaft stem has been inserted and fastened (Figure 3), as described above, into the body of the milling tool, the milling tool in this configuration is inserted into the containment body 10 (Figure 2). The fastening dowels 11 (Figure 4) or other suitable means make the containment body 10 (Figure 2) integral with the body 2 (Figure 2) of the milling tool.

When the milling tool is in the resting position (Figure 2), the sensing pin 16 (Figure 2) contacts the flat surface of the shaft stem 9 (Figure 2), locking the shaft stem in a predetermined position. This condition does not change until the shaft stem 9 (Figure 2) is inserted into the head 6 (Figure 2) of the machine tool itself and, at the same time, the anti-rotation pin 14 (Figure 2) is inserted into its housing within the flanged body 21 (Figure 2).

At this point, the slider 13 (Figure 2), by contacting the adjustment dowel 22 (Figure 2) slides along its axis, making the sliding ball 18 (Figure 2) rotate, and therefore biasing the spring element 12 (Figure 2) arranged below it. When the slider 13 (Figure 2) has ended its stroke and the anti-rotation pin 14 (Figure 2) contacts the adjustment dowel 22 (Figure 2), the sliding ball 18 (Figure 2), following the geometry of its guide that is located along the slider 13 (Figure 2), is located at the point where the guide is deepest. This causes a shifting of the ball itself along the axis of the ball holding pin 17 (Figure 2) in the direction opposite the shaft stem 9 (Figure 2). In this way, the ball holding pin 17 (Figure 2) moves as well, thus reducing the bias on its spring element 15 (Figure 2), causing the sensing pin 16 (Figure 2) to lose contact with the flat surface of the shaft stem 9 (Figure 2) and unlocking it. The shaft, free to rotate, during the machining operations transmits the motion from the head of the machine tool 6 (Figure 2) to the milling cutter 1 (Figure 2). When the work is complete, the shaft together with the milling tool is removed from the head of the machine tool 6 (Figure 2), the anti-rotation pin 14 (Figure 2) is unhooked from its housing, the spring element of the slider 12 (Figure 2) releases the previously absorbed spring bias and allows the slider 13 (Figure 2) to slide along its axis in the direction of the flanged body 21 (Figure 2), making the sliding ball 18 (Figure 2) rotate in the opposite direction from the movement it receives when the slider slides towards the spring element 12 (Figure 2). Again, following the geometry of its guide, the ball finds itself at the point where this guide is shallowest. This causes the ball to shift towards the shaft. In this way the ball holding pin 17 (Figure 2) moves while biasing its spring element 15 (Figure 2), and the sensing pin 16 (Figure 2) again comes in contact with the flat surface of the shaft stem 9 (Figure 2), thus locking it and returning the unit to the initial resting condition.

The present device offers numerous advantages as compared to the state of the art, both concerning the device as a whole and as regards the individual components of the device.
- The first advantage lies in the fact that the interaction between the flat surface of the shaft stem 9 (Figure 2) and the sensing pin 16 (Figure 2) allows to lock the shafts of the milling tools. This feature makes them applicable to machine tools, such as, for example, but not exclusively, machining centres which, in order to perform their operations, including tool changes, require these tools to be locked in a predetermined position. It is made possible, therefore, to cut grooves of various shapes and sizes inside holes of various shapes and sizes with these machine tools, without having to restart other tooling with different machines, as it is the case in the current state of the art.
- The second advantage lies in the fact that the containment body 10 (Figure 4) complete with the locking mechanism with parts 12, 13, 14, 15, 16, 17, 18, 19 (Figure 4) connected to the milling tool body, together with the anti-rotation pin 14 (Figure 2), which is engaged in its housing within the flanged body 21 (Figure 2), represents the means used to ensure the anti-rotation needed for the correct operation of the milling tool itself.
- The third advantage, concerning the shaft (Figure 3), lies in the fact that it becomes possible to substitute the engagement pins 7 (Figure 3) more simply and more quickly as compared to the current state of the art; they are subject to wear due to the sliding friction with the cutter during the milling work. This is why, while the shaft currently on the market includes a single stem, at the end of which the engagement pins 7 are press-fitted into blind holes (Figure 3), in the new shaft (Figure 3) the pins are inserted into partially passing holes, and therefore their expulsion from their housings with normal, commercially available tools is much easier.
- The fourth advantage, concerning the shaft, lies in the fact that it becomes possible to substitute only the pin holder head 8 (Figure 3) with another similar one, without having to replace the whole shaft, as must be done in the current state of the art, in case the head is damaged during milling in such a way as to make it impossible to replace the engagement pins only.

The dimensions and the materials used to carry out the presently described device, and/or each of its parts, may vary depending on the requirements of the applications and of the uses of the device, and different ways of carrying out the same teaching of the invention can be devised, such as, for example but not exclusively, a different way to couple the containment body 10 (Figure 4), complete with the locking mechanism with its parts 12, 13, 14, 15, 16, 17, 18, 19 (Figure 4), to the body of the milling tool, a different way of moving the ball holding pin 17 (Figure 4) and the slider 13 (Figure 4), a different form of shaft locking, a different way to couple the pin holder head 8 (Figure 3) to the stem 9 (Figure 3), a different way to fit the engagement pins 7 (Figure 3) into the pin holder head 8 (Figure 3). These variations do not depart from the scope of the invention as defined in the claims.

## Claims

1. A device provided to be used together with commercially available tools (1, 2, 9) for milling grooves of various shapes and sizes inside holes of various shapes and sizes, hereinafter called milling tools, which allows the use thereof on any machine tool such as, in particular, a machining centre which, in order to carry out work operations, including tool changes, requires the locking of the tools themselves in a predetermined position, and wherein the milling tool (1, 2, 9) is driven in rotation by a shaft (9), the device having means adapted to lock the milling tool (1, 2, 9) in said predetermined position, said device further having a containment body (10) that partially houses the shaft (9) of the milling tool (1, 2, 9) and within which a locking mechanism, is arranged transversely to said shaft (9), **characterized by** said locking mechanism including a ball holding pin (17) sliding along its own axis and having at one end a cavity forming a partial housing for a ball (18) contained therein, a sensing pin (16) being arranged at the other end of said pin (17) and being partially housed within a special cavity inside said containment body (10), in order to interact with said shaft (9) and achieve the locking thereof in a predetermined position, said locking mechanism further including a slider (13) having a section which serves as a guide and a bearing for said ball (18).

2. The device according to claim 1, **characterized in that** said shaft (9) comprises a cylindrical stem having different diameters, and having, preferably but not necessarily at the height of the maximum diameter, a flat surface for locking said stem in a predetermined position by means of said sensing pin (16).

3. The device according to claim 2, **characterized by** fastening dowels (11) making the containment body (10) integral with the body of the milling tool (1), in such a way as to prevent axial shifts and mutual rotations.

4. The device according to any of the previous claims, wherein said slider (13) is partially contained within the containment body (10), is sliding along its own axis and has on its surface a flat section with varying depth, facing the ball (18) which is partially housed in the ball holding pin (17), which serves as said guide and said bearing for the ball itself.

5. The device according to claim 4, **characterized in that** said slider (13) also has a groove along its own axis, on the end opposite the flat section, that serves as a guide for the ball (18); said slider acting as a stop preventing the ball, the ball holding pin (17) and the sensing pin (16) from coming out, and causing during its own sliding motion the movement of the ball, which is arranged between the slider itself and the ball holding pin, which in turn transmits the motion to the ball holding pin and to the sensing pin attached thereto, allowing therefore the latter to interact with the flat surface arranged on the maximum diameter of the shaft stem; spring means (12, 15) adapted to be spring biased, so as to later release the stored force, in order to ensure the sliding movement of the slider and of the ball holding pin, and a guide cap, partially inserted into and integrally fastened to the containment body on the side where the slider is housed, having one end inserted into the containment body (10) itself, on which a relief is present which, by interacting with the groove on the cursor, prevents the latter from rotating within its own housing.

6. The device according to any of the previous claims, wherein the locking mechanism is further **characterized by** the provision of an anti-rotation pin (14), having inside a cavity with varying geometry, within which the slider end which is not inserted into the containment body is partially housed; said anti-rotation pin being integrally fastened to the containment body (10), in such a way as to prevent the slider (13) from coming out completely from its own housing, located within the containment body itself.

7. The device according to any of the previous claims, **characterized by** a housing of the anti-rotation pin (14) which comprises a flanged body (21) being applied from the side to the head of the machine tool, such as for example, but not exclusively, a machining centre, by means of suitable fastening means, and having a hollow geometry adapted to house the anti-rotation pin; the insertion or respectively the removal of the anti-rotation pin from said cavity causing the movement of the slider partially inserted into said pin; the regulation of the adjustment dowel (22) housed within the flanged body allowing to keep the slider stroke constant, and the insertion of the anti-rotation pin into the flanged body allowing moreover to bring about the anti-rotation needed for the proper operation of the milling tool (1).

8. The device according to any of the previous claims, wherein the shaft (9) is moreover **characterized by** the provision of a pin holder head (8), on which holes are located inside which engagement pins (7) are inserted; said head being connected to the stem by way of a connecting element, which is preferably but not exclusively threaded, and which is located at the end opposite the one where the engagement pins are inserted; said head being removable and the engagement pins, being engaged in partially passing holes, allowing an easy replacement of such pins in the case of wear, due to the sliding friction thereof with the mill during milling.

## Patentansprüche

1. Vorrichtung, geeignet zur Anwendung mit im Handel erhältlichen Werkzeugen (1, 2, 9), im folgenden Fräswerkzeugen genannt, zur Bearbeitung durch Fräsen von Nuten verschiedener Gestalten und Abmessungen innerhalb Bohrungen verschiedener Formen und Größten, welche Vorrichtung die Anwendung der Werkzeuge in jeder Werkzeugmaschine und insbesondere in einem Bearbeitungszentrum erlaubt, das zur Durchführung ihrer Aufgaben, u.a. eines Werkzeugwechsels, eine Blockierung der Werkzeuge in einer vorbestimmten Lage erfordert, wobei das Fräswerkzeug (1, 2, 9) durch eine Welle (9) in Drehung versetzt wird, wobei in der Vorrichtung Mittel vorgesehen sind zur Blockierung des Fräswerkzeuges (1, 2, 9) in der genannten vorbestimmten Lage, wobei die Vorrichtung außerdem einen Gehäusekörper (10) aufweist, in dem die Welle (9) des Fräswerkzeuges (1, 2, 9) teilweise aufgenommen ist, und innerhalb dessen ein quer zur genannten Welle (9) angeordneter Blockierungsmechanismus vorgesehen ist, **dadurch gekennzeichnet, daß** der genannte Blockierungsmechanismus einen kugeltragenden Stift (17) aufweist, der sich entlang seine eigene Achse verschiebt und eine Ausnehmung aufweist, die eine teilweise Aufnahme für eine darin enthaltene Kugel (18) darstellt, wobei am anderen Ende des genannten Stiftes (17) ein Fühler (16) angeordnet ist, der teilweise in einer im genannten Gehäusekörper (10) vorgesehenen Aufnahme angeordnet ist, um mit der genannten Welle (9) zusammenzuwirken und die Blockierung derselben in einer vorbestimmten Lage zu verwirklichen, wobei der genannte Blockierungsmechanismus außerdem einen Läufer (13) aufweist, der mit einem flachen Abschnitt zur Führung und zur Haltung derselben Kugel (18) dient.

2. Vorrichtung nach Anspruch 1, **dadurch gekennzeichnet, daß** die Welle (9) aus einem zylindrischen, mit verschiedenen Durchmessern versehenen Schaft besteht, der vorzugsweise, aber nicht notwendigerweise, auf der Höhe des maximalen Durchmessers eine flache Oberfläche aufweist für die Blockierung desselben in einer vorbestimmten Position durch den genannten Fühler (16).

3. Vorrichtung nach Anspruch 2, **gekennzeichnet durch** Befestigungsdübel (11), die den Gehäusekörper (10) mit dem Körper des Fräswerkzeuges (1) einteilig machen, um axiale Verschiebungen und gegenseitige Verdrehungen zu verhindern.

4. Vorrichtung nach einem oder mehreren der vorangehenden Ansprüche, wobei der genannte Läufer (13) teilweise innerhalb des Gehäusekörpers (10) aufgenommen ist und entlang seine eigene Achse läuft, und auf seiner Oberfläche einen flachen Abschnitt mit veränderlicher Tiefe aufweist, der auf die im kugeltragenden Stift (17) teilweise aufgenommene Kugel (18) weist und der zur genannten Führung und Haltung derselben Kugel dient.

5. Vorrichtung nach Anspruch 4, **dadurch gekennzeichnet, daß** der genannte Läufer (13) außerdem eine entlang seine eigene Achse vorgesehene, auf der dem flachen Abschnitt zur Führung der Kugel (18) gegenüberliegenden Seite angeordnete Nut aufweist, wobei der genannte Läufer als Sicherung gegen ein Herausfallen der Kugel, des kugeltragenden Stiftes (17) und des Fühlers (16) dient und während seiner Verstellung die Bewegung der Kugel zwischen dem genannten Fühler und dem kugeltragenden Stift bewerkstelligt, wobei die Bewegung dem kugeltragenden Stift und dem damit verbundenen Fühler übertragen wird, so daß letzterer mit dem auf dem maximalen Durchmesser des Wellenschaftes vorgesehenen flachen Abschnitt zusammenwirken kann; Federmittel (12, 15), die elastisch beansprucht werden können, um nachher die gespeicherte Kraft wieder freizulassen und die Verschiebung des Läufers und des kugeltragenden Stiftes zu verursachen; und einen Führungsstöpsel, der im Gehäusekörper, auf der Seite, wo der Läufer angeordnet ist, teilweise eingeführt und einteilig befestigt ist, wobei ein Ende desselben im Gehäusekörper (10) selbst eingesteckt ist, wobei eine vorgesehene Erhebung, mit der auf dem Läufer vorgesehenen Nut zusammenwirkend, eine Verdrehung des Läufers innerhalb seiner Aufnahme verhindert.

6. Vorrichtung nach einem oder mehreren der vorangehenden Ansprüche, wobei der Blockierungsmechanismus **gekennzeichnet ist durch** das Vorsehen eines Antirotationsstift (14), der im Inneren eine Aussparung mit variablen Geometrie aufweist, in der das nicht im Gehäusekörper eingesteckte Ende des Läufers aufgenommen ist, wobei der genannte Antirotationsstift auf dem Gehäusekörper (10) einteilig befestigt wird, so daß der Läufer (13) gegen ein vollständiges Herausfallen aus seiner Aufnahme innerhalb des Gehäusekörpers gesichert wird.

7. Vorrichtung nach einem oder mehreren der vorangehenden Ansprüche, **dadurch gekennzeichnet, daß** die Aufnahme des Antirotationsstiftes (14) aus einem seitlich auf dem Kopf des Maschinenwerkzeuges durch geeignete Fixierungsmittel befestigten Flanschkörper (21) mit hohler Geometrie besteht, um den Antirotationsstift aufzunehmen, wobei das Maschinenwerkzeug beispielweise, aber nicht ausschließlich, ein Bearbeitungszentrum ist, wobei die Einführung bzw. die Entnahme des Antirotationsstiftes aus dem genannten Hohlraum die Bewegung des teilweise in dem Stift aufgenommenen Läufers verursacht, wobei die Einstellung des im Flanschkörper aufgenommenen Einstellungsdübels (22) ermöglicht, den Hub des Läufers konstant zu halten, und die Einführung des Antirotationsstiftes in den Flanschkörper die für den einwandfreien Betrieb des Fräswerkzeuges (1) notwendige Rotationshemmung bewerkstelligt.

8. Vorrichtung nach einem oder mehreren der vorangehenden Ansprüche, wobei die Welle (9) außerdem **gekennzeichnet ist durch** das Vorsehen eines stifttragenden Kopfes (8), auf dem Bohrungen vorhanden sind, in denen Eingreifstifte (7) stecken, wobei der genannte Kopf **durch** ein vorzugsweise aber nicht notwendigerweise mit Gewinde versehenes Verbindungselement mit dem Schaft verbunden ist, das am demjenigen Ende angeordnet ist, das dem Ende mit den Eingreifstiften gegenüberliegt, wobei der genannte Kopf herausnehmbar ist und wobei die Eingreifstiften in teilweise durchgehenden Bohrungen aufgenommen sind, so daß solche Stifte, im Falle eines während der Bearbeitung durch Gleitreibung mit dem Fräswerkzeug verursachten Verschleißen, einfach auswechselbar sind.

## Revendications

1. Dispositif destiné à être utilisé avec les outils (1, 2, 9) disponibles sur le marché pour l'usinage par fraisage de rainures avec de différentes formes et dimensions internes à l'intérieur de trous avec de différentes formes et dimensions, dans la suite appelés outils de fraisage, lequel dispositif permet leur utilisation dans tous types de machines-outils, en particulier dans un centre d'usinage lequel, pour exécuter ses opérations, parmi elles le changement d'outil, demande le blocage des outils dans une position prédéfinie, et où l'outil de fraisage (1, 2, 9) est actionné par rotation par un arbre (9), le dispositif comportant des moyens aptes à bloquer l'outil de fraisage (1, 2, 9) dans ladite position prédéfinie, ledit dispositif comportant en outre un corps de logement (10) dans lequel l'arbre (9) de l'outil de fraisage (1, 2, 9) est partiellement logé, et dans lequel un mécanisme de blocage est arrangé transversalement audit arbre (9), **caractérisé en ce que** ledit mécanisme de blocage comporte un doigt porte-bille (17), qui coulisse le long de son axe, et comporte à une extrémité une cavité qui forme un logement partiel pour une bille (18) contenue ; l'autre extrémité dudit doigt (17) comportant un palpeur (16) partiellement logé dans une cavité prévue dans ledit corps de logement (10) pour coopérer avec ledit arbre (9) e réaliser son blocage dans une position prédéfinie, ledit mécanisme de blocage comportant en outre un curseur (13) ayant une portion qui a la fonction de guider et supporter ladite bille (18).

2. Dispositif selon la revendication 1, **caractérisé en ce que** ledit arbre (9) est constitué d'une tige cylindrique avec de différents diamètres, qui comporte préférablement, mais pas nécessairement, au niveau du diamètre maximal, une surface plane pour le blocage de la tige dans une position prédéfinie au moyen dudit palpeur (16).

3. Dispositif selon la revendication 2, **caractérisé en ce qu'**il comporte des grains de fixage (11) qui solidarisent le corps de logement (10) avec le corps de l'outil de fraisage (1) de façon à empêcher des déplacements axiaux et des rotations relatives.

4. Dispositif selon l'une ou plusieurs des revendications précédentes, dans lequel ledit curseur (13) est partialement contenu à l'intérieur du corps de logement (10) et coulisse le long de son axe, et comporte sur sa surface une portion plane avec profondeur variable, orientée vers la bille (18) partialement logée dans le doigt porte-bille (17), qui a la fonction de guider et supporter ladite bille.

5. Dispositif selon la revendication 4, **caractérisé en ce que** ledit curseur (13) comporte en outre une rainure le long de son axe, du côté opposé à la portion plane qui guide la bille (18) ; ledit curseur faisant fonction d'arrêt contre le détachement de la bille, du doigt porte-bille (17) et du palpeur (16) et, pendant son coulissement, provoquant le mouvement de la bille interposée entre le curseur et le doigt porte-bille, où le mouvement est transmis au doigt porte-bille et au palpeur joint à celui-ci, permettant ainsi à ce dernier d'interagir avec la surface plane arrangée sur le diamètre maximal de la tige de l'arbre ; des moyens élastiques (12, 15) aptes à être chargés élastiquement, pour délivrer par la suite la force accumulée, assurant le coulissement du curseur et du doigt porte-bille, e un bouchon guide qui est partiellement inséré et fixé de façon solidarisée au corps de logement, du côté du curseur, ayant une extrémité insérée dans le corps de logement (10) même, sur lequel un relief est prévu qui, en coopérant avec la rainure sur le curseur, empêche a celui-ci de tourner dans son logement.

6. Dispositif selon l'une ou plusieurs des revendications précédentes, **caractérisé en ce que** le mécanisme de blocage comporte un doigt anti-rotation (14), ayant à son intérieur une cavité avec géométrie variable, dans laquelle vient se loger partialement l'extrémité du curseur qui n'est pas insérée dans le corps de logement ; ledit doigt anti-rotation étant fixé de façon solidarisée au corps de logement (10), pour empêcher au curseur (13) de sortir complètement de son logement à l'intérieur du corps de logement même.

7. Dispositif selon l'une ou plusieurs des revendications précédentes, **caractérisé en ce que** il comporte un logement du doigt anti-rotation (14) qui est constitué d'un corps bridé (21) qui est appliqué latéralement à la tête de la machine-outil, par exemple mais non de façon exclusive un centre d'usinage, par l'intermédiaire de moyens de fixage appropriés, et lequel comporte une géométrie creuse apte à loger le doigt anti-rotation ; l'insertion ou respectivement l'extraction du doigt anti-rotation produisant le mouvement du curseur partiellement inséré dans ledit doigt; la régulation du grain de régulation (22) logé à l'intérieur du corps bridé permettant de maintenir la course du curseur constante, e l'insertion du doigt anti-rotation dans le corps bridé permettant en outre de réaliser l'anti-rotation nécessaire au correct fonctionnement de l'outil de fraisage (1).

8. Dispositif selon l'une ou plusieurs des revendications précédentes, où l'arbre (9) est **caractérisé en outre par** la présence d'une tête porte-doigts (8), sur laquelle des trous sont réalisés dans lesquels des doigts d'engrènement (7) s'insèrent, ladite tête étant jointe à la tige à l'intermédiaire d'un élément de jonction préférablement, mais non exclusivement, fileté, arrangé à l'extrémité opposée à l'extrémité d'insertion des doigts d'engrènement; ladite tête étant amovible et, les doigts d'engrènement étant logés dans des trous partiellement passants, permettant une simple substitution desdits doigts en cas d'usure provoquée par leur frottement avec la fraise pendant le fraisage.
